## Europäisches Patentamt
## European Patent Office
## Office européen des brevets

(19)

(11) Numéro de publication: **0 148 054**
**B1**

(12)

# FASCICULE DE BREVET EUROPEEN

(45) Date de publication du fascicule du brevet:
**22.04.87**

(51) Int. Cl.⁴: **B 25 J 17/02**

(21) Numéro de dépôt: **84402473.7**

(22) Date de dépôt: **03.12.84**

(54) Tête articulée pour robot industriel et robot équipé d'une telle tête.

(30) Priorité: **04.01.84 FR 8400069**

(43) Date de publication de la demande:
**10.07.85 Bulletin 85/28**

(45) Mention de la délivrance du brevet:
**22.04.87 Bulletin 87/17**

(84) Etats contractants désignés:
**CH DE GB IT LI SE**

(56) Documents cités:
**EP - A - 0 074 882
EP - A - 0 085 307
FR - A - 2 310 842**

(73) Titulaire: **Barland, Michel, 32, Allées Paulmy,
F-64100 Bayonne (FR)**

(72) Inventeur: **Barland, Michel, 32, Allées Paulmy,
F-64100 Bayonne (FR)**

(74) Mandataire: **Loriot, Jacques et al, S.A. FEDIT-LORIOT
(Cabinet Guerbilsky) 38 avenue Hoche, F-75008 Paris
(FR)**

ACTORUM AG

# Description

La présente invention concerne une tête articulée pour les appareils de positionnement et d'orientation automatiques d'un outil, capables d'effectuer des opérations industrielles telles que soudage, usinage, peinture, ces appareils étant couramment désignés sous le terme de «robots industriels».

Un robot industriel comprend généralement un premier élément mobile, ou bras, capable de se déplacer suivant trois axes, par exemple trois axes de translation X, Y, Z, et un deuxième élément articulé qui est porté à l'extrémité des bras et qui supporte l'outil. Ce deuxième élément, qui est couramment désigné sous le terme de «tête articulée» ou de «poignet de robot» assure l'orientation dans l'espace de l'outil qu'il porte, par combinaison de mouvements de rotation et d'oscillation, suivant au moins deux axes de degré de liberté.

Il en résulte qu'un robot industriel doit comporter au moins 5 degrés de liberté, chacun nécessitant un moteur de commande indépendant dont la plupart doivent actionner des éléments eux-mêmes portés par des parties déjà mobiles. Ceci entraîne, même avec 5 degrés de liberté, une importante complication pour établir les transmissions entre moteurs et parties actionnées ou pour établir l'alimentation de moteurs si ceux-ci sont montés directement sur une partie mobile.

Ces problèmes sont particulièrement délicats pour la commande de la tête articulée elle-même où l'on doit utiliser des joints tournants, des collecteurs ou des transmissions très compliquées pour amener l'énergie aux derniers, et en particulier au dernier, axes d'articulation.

Il en résulte des risques de mauvais contact, de jeux, de fuites, etc. qui réduisent la fiabilité de ces appareils.

Mais avec les robots à 5 degrés de liberté, c'est-à-dire dans lesquels la tête articulée comporte deux axes de rotation commandés, il apparaît que l'outil ne peut pas effectuer en continu tous les déplacements qui seraient souhaitables, car il existe des «points singuliers», c'est-à-dire des orientations de l'outil pour lesquelles cette orientation ne peut pas être modifiée, dans un plan donné, avec une vitesse non nulle. Pour certaines orientations de l'outil, on ne peut donc pas passer d'une orientation à une orientation voisine par un déplacement continu, ce qui oblige à des reprises d'outil ou ce qui oblige à limiter les orientations utilisables de l'outil à une petite fraction seulement de la sphère théorique.

Pour supprimer, ou au moins réduire, cet inconvénient, on a proposé de réaliser des têtes articulées de robot comportant trois axes de rotation, par exemple comme décrit dans le brevet français 2 503 012, ce qui fait six axes de liberté de mouvement pour le robot. Mais dans ce cas, la tête articulée comporte trois éléments ou bâtis mobiles les uns par rapport aux autres commandés individuellement en rotation et, donc, trois moteurs individuels, ce qui complique encore plus la construction en ce qui concerne la transmission d'énergie aux derniers axes de l'articulation. Au surplus, avec certaines réalisations de têtes articulées à trois axes, il subsiste encore des points singuliers qui obligent, pour passer d'une orientation donnée de l'outil à une orientation voisine, à effectuer une rotation complète de l'une au moins des éléments mobiles de la tête articulée.

La présente invention a pour but de remédier à ces inconvénients et de permettre la réalisation d'une tête articulée de robot ayant trois axes de rotation dont les mouvements sont commandés par deux moteurs seulement, montés sur une partie fixe de la tête articulée, et qui ne présente aucun point singulier empêchant des changements d'orientation de l'outil en continu, même pour des orientations de l'outil au-delà de la demi-sphère de l'espace, ce qui n'était pas possible jusqu'à présent, même avec des têtes articulées à trois axes commandés par trois moteurs.

L'invention a pour objet une tête articulée pour robot industriel qui comprend trois bâtis mobiles montés à la suite les uns des autres suivant un axe longitudinal, le premier bâti étant porté par l'extrémité libre du bras du robot et étant rotatif autour d'un premier axe par rapport à ce bras, le deuxième bâti étant porté par le premier bâti et rotatif autour d'un deuxième axe par rapport au premier bâti, et le troisième bâti étant porté par le deuxième bâti et rotatif autour d'un troisième axe par rapport au deuxième bâti, ledit troisième bâti supportant un outil positionné et orienté par le robot.

Suivant l'invention:

— le premier axe est perpendiculaire à l'axe longitudinal;

— le premier axe et le troisième axe sont espacés l'un de l'autre et sont toujours situés dans un même plan, lesdits premier et troisième axes étant parallèles en position droite de la tête articulée;

— le deuxième axe est situé entre le premier et le troisième axes et est toujours perpendiculaire au plan précité contenant le premier et le troisième axes;

— la rotation des trois bâtis autour des trois axes d'articulation $A_1$, $A_2$, $A_3$ est commandée par deux organes moteurs portés par le bras 4.

Suivant une forme préférée de réalisation:

— la rotation du premier bâti autour du premier axe est commandée par un premier organe moteur porté par le bras;

— la rotation du troisième bâti autour du troisième axe est commandée, à partir du premier bâti, et, pertant, à partir du premier organe moteur, par l'intermédiaire d'une première chaîne cinématique qui est interposée entre le premier et le troisième bâti et qui impose au troisième bâti des déplacements angulaires dans le même sens que les déplacements angulaires du premier bâti;

— la rotation du deuxième bâti autour du deuxième axe est commandée, à partir d'un deuxième organe moteur porté par le bras, par l'intermédiaire d'une deuxième chaîne cinématique interposée entre le premier et le deuxième bâti.

De préférence, un mécanisme différentiel est interposé entre les deux chaînes cinématiques de façon que les mouvements de pivotement autour du premier et du troisième axe n'aient aucune influence sur le deuxième axe d'articulation et inversement.

L'invention a également pour objet les robots industriels, et notamment les robots d'usinage, équipés d'une telle tête articulée.

L'invention sera mieux comprise à la lecture de la description détaillée qui va suivre et à l'examen des dessins annexés qui représentent, à titre s'exemples non limitatifs, plusieurs modes de réalisation de l'invention.

La figure 1 est une vue schématique en perspective des éléments essentiels (axes d'articulation et bâtis) d'une tête articulée suivant l'invention.

La figure 2 est une vue en coupe, suivant un plan passant par le deuxième axe et perpendiculaire au premier et au troisième axe, d'un mode de réalisation de l'invention.

La figure 3 est une vue partielle de la tête articulée de la figure 2, en coupe suivant un plan perpendiculaire à celui de la figure 2.

La figure 4 est une vue analogue à la figure 2 d'une tête articulée comportant un différentiel entre les deux chaînes cinématiques.

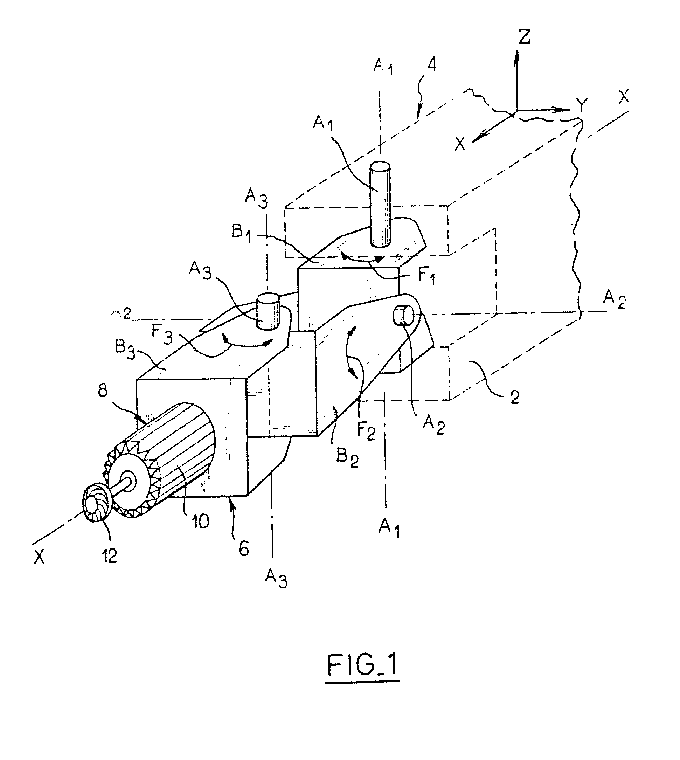

On a représenté schématiquement sur la figure 1 l'extrémité 2 du bras 4 d'un robot industriel. Ce bras peut être déplacé suivant trois axes, par exemple trois axes rectangulaires XYZ, par des moyens connus qui ne font pas partie de l'invention. La tête articulée 6 suivant l'invention comprend trois bâtis $B_1$, $B_2$, $B_3$ montés à la suite les uns des autres suivant un axe longitudinal XX et articulés les uns aux autres. Pour la simplification du dessin, ces trois bâtis ont été représentés sous la forme de trois châssis identiques analogues à des étriers, mais, comme on le verra plus loin, ces bâtis peuvent avoir une forme différente, par exemple une forme de boîtier.

Le premier bâti $B_1$ est porté par l'extrémité 2 du bras 4 par rapport auquel il peut pivoter suivant la flèche $F_1$ autour d'un premier axe $A_1$. Le deuxième bâti $B_2$ est porté par le premier bâti $B_1$ par rapport auquel il peut pivoter, suivant la flèche $F_2$, autour d'un deuxième axe $A_2$. Le troisième bâti $B_3$ est porté par le deuxième bâti $B_2$ par rapport auquel il peut pivoter, suivant la flèche $F_3$, autour d'une axe $A_3$. Le troisième bâti $B_3$ supporte l'outil 8 que doit commander le robot, en position et en orientation, cet outil comportant par exemple un moteur 10 qui entraîne un outil d'usinage 12, lequel peut donc être orienté dans toutes les directions de l'espace par la tête articulée.

Dans la position droite de la tête articulée, représentée sur la figure 1, l'orientation de l'outil 10 est confondue avec l'axe longitudinal XX.

Le premier axe d'articulation $A_1$ est perpendiculaire à l'axe longitudinal XX. Dans le représentation de la figure 1, cet axe est vertical pour l'observateur. Dans la position droite de la tête, le troisième axe $A_3$ est parallèle à l'axe $A_1$, les deux axes étant contenus dans un plan vertical passant par l'axe longitudinal XX. Mais, pour toutes les autres positions de la tête articulée, cet axe $A_3$ se trouve toujours situé dans un plan contenant l'axe $A_1$. Dans la représentation de la figure 1 ce plan est toujours un plan vertical, quelle que soit l'orientation de la tête.

L'axe d'articulation $A_2$ est un axe intermédiaire situé entre les axes $A_1$ et $A_3$, par exemple, mais non obligatoirement, à mi-distance entre ces deux axes. L'axe $A_2$ est toujours perpendiculaire au plan contenant le premier et le troisième axe, c'est-à-dire que dans la représentation de la figure 1 l'axe $A_2$ est toujours horizontal.

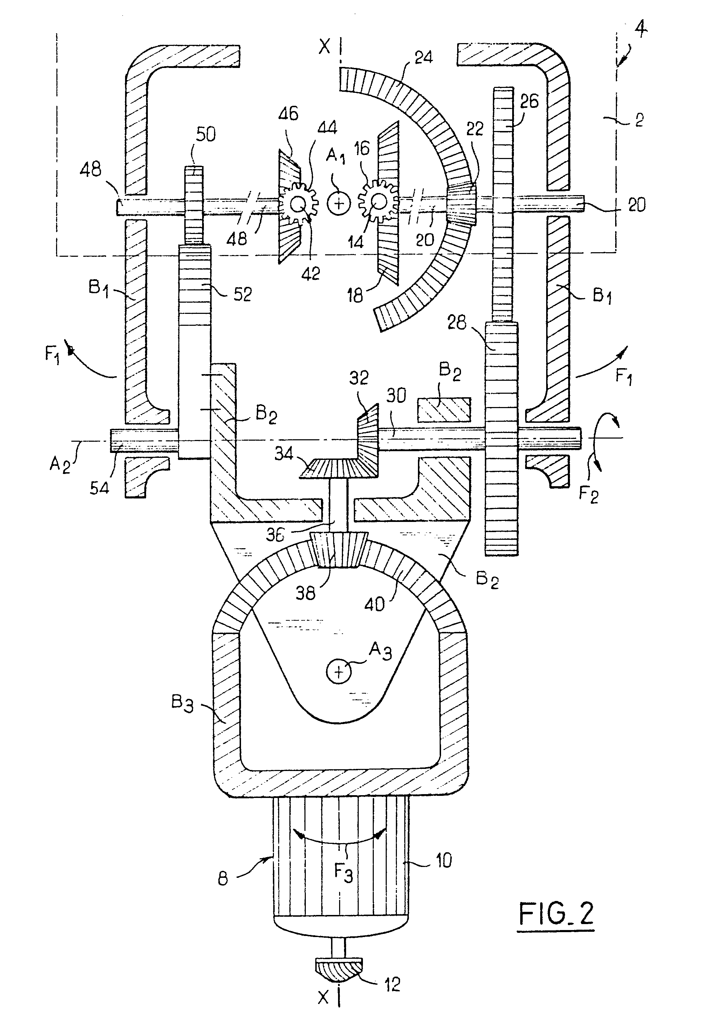

Suivant l'invention, les déplacements angulaires des trois articulations sont commandés à partir de seulement deux entrées motrices au moyen de deux chaînes cinématiques dont on va décrire maintenant divers modes de réalisation à propos des figures 2, 3 et 4.

Sur la figure 2, qui est une vue en coupe par un plan horizontal (dans le cas où la tête articulée est dans la position représentée sur la figure 1), on voit la trace des axes $A_1$ et $A_3$ qui sont des arbres verticaux (pour l'observateur de la figure 2) et on voit l'axe intermédiaire $A_2$ horizontal.

L'extrémité 2 du bras 4, qui a été seulement représentée en traits interrompus, supporte le bâti $B_1$ de façon pivotante autour de l'axe $A_1$. Pour la clarté du dessin, une partie seulement des bâtis $B_2$ et $B_3$ a été représentée.

L'entrée motrice de la première chaîne cinématique est constituée par un arbre vertical 14 sur lequel est calé un pignon conique 16 engrenant avec une roue conique 18 calée sur un arbre horizontal 20 qui tourillonne dans le bâti $B_1$ et sur lequel est calé un pignon conique 22.

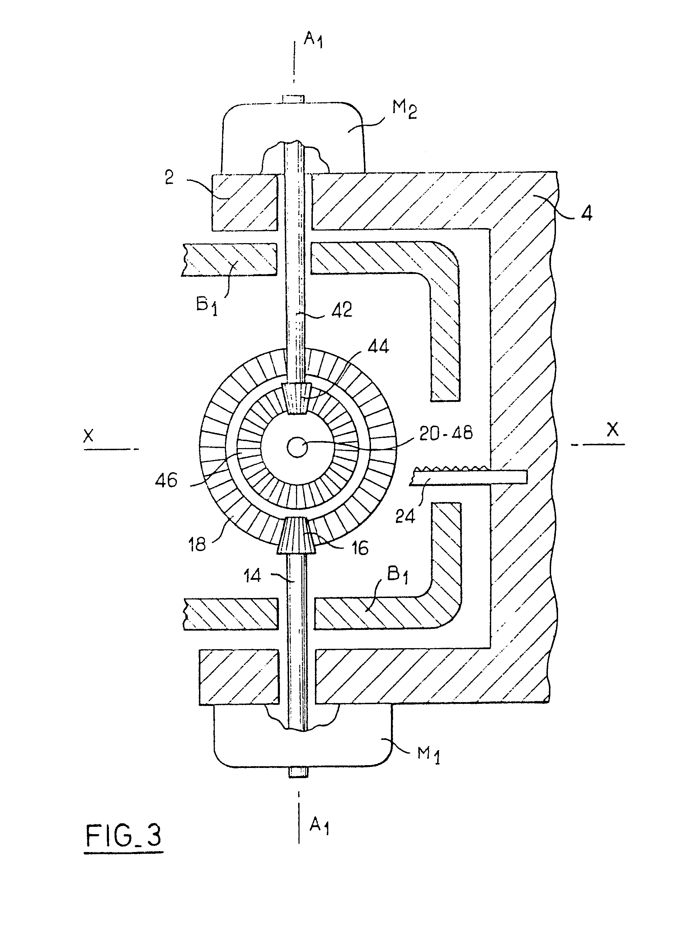

Pour la clarté du dessin, sur la figure 2, on a coupé l'arbre 20, entre la roue 18 et le pignon 22, de façon à décaler vers la droite l'arbre 14 qui, en réalité, comme cela est représenté sur la figure 3, est coaxial au premier axe $A_1$ de l'articulation.

La figure 3, qui est une vue partielle en coupe verticale, montre que l'arbre 14 tourillonne dans le bâti $B_1$ et dans l'extrémité en forme de fourche 2 du bras 4 pour constituer l'axe de l'articulation $A_1$ du bâti $B_1$ par rapport au bras.

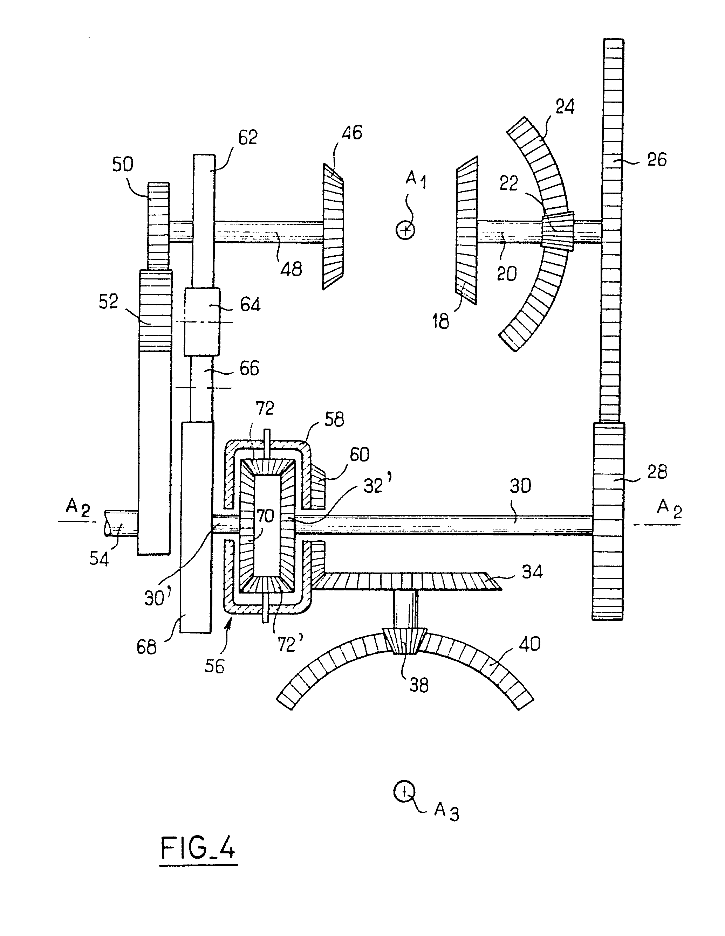

Le pignon conique 22 engrène avec un secteur denté 24 qui est solidaire du bras 4 et qui a été représenté partiellement sur la figure 4.

L'arbre 14, constituant la première entrée motrice de l'articulation, peut être commandé par exemple par un moteur $M_1$ (figure 3) porté par le bras 4. On voit déjà que la rotation de ce moteur permet de faire pivoter le bâti $B_1$ autour de l'axe $A_1$ par rapport au bras 4 dans un sens ou dans l'autre, suivant la flèche $F_1$, par engrènement du pignon 22 avec le secteur fixe 24.

La première chaîne cinématique comprend également les éléments suivants: une roue dentée 26 qui engrène avec une roue 28 calée sur un arbre 30, lequel tourillonne également dans le bâti $B_1$ et s'étend suivant le deuxième axe horizontal $A_2$ de la tête articulée; un pignon conique 32, calé sur l'arbre 30 et coopérant avec un pignon conique 34 calé sur un arbre 36 qui porte également un pignon conique 38 engrenant avec un secteur denté 40 solidaire du troisième bâti $B_3$ lequel est monté pivotant autour de l'axe $A_3$. L'arbre 30 tourillonne dans le bâti $B_2$ auquel il sert d'axe d'articulation suivant le deuxième axe $A_2$. L'arbre 36 tourillonne dans le fond du bâti $B_2$.

La première chaîne cinématique décrite ci-dessus est telle que si on entraîne en rotation l'arbre d'entrée 14 dans le sens horaire, le bâti $B_1$ pivote dans le sens horaire par rapport à l'axe $A_1$ et le bâti $B_3$ pivote également, dans le même sens, par rapport au bâti $B_2$ autour de l'axe $A_3$. On voit donc que les pivotements des deux articulations $A_1$ et $A_3$ de la

tête sont commandés à partir d'un seul organe moteur.

La deuxième chaîne cinématique commande le pivotement autour du deuxième axe $A_2$. Cette deuxième chaîne comprend une deuxième entrée motrice constituée par un arbre vertical 42 (toujours pour l'observateur de la figure 2) sur lequel est calé un pignon conique 44 engrenant avec une roue conique 46 calée sur un arbre horizontal 48 qui tourillonne dans le bâti $B_1$. L'arbre 48 est situé dans le prolongement de l'arbre 20.

Comme pour la première chaîne cinématique, on a décalé, sur la figure 2, l'arbre 42 vers la gauche, mais en réalité il est coaxial à l'axe $A_1$ (figure 3) et tourillonne, comme l'arbre 14, dans le bâti $B_1$ et dans l'extrémité en forme de fourche 2 du bras 4 pour matérialiser le premier axe de pivotement $A_1$ du bâti $B_1$ par rapport au bras 4. L'arbre 42 peut être entraîné par un deuxième moteur $M_2$ porté par le bras 4.

La deuxième chaîne cinématique comprend également un pignon denté 50, qui est calé avec l'arbre 48 et qui engrène avec un secteur denté 52. Ce secteur denté est centré sur un pivot 54, qui tourillonne suivant l'axe $A_2$ dans le bâti $B_1$ et est solidaire du bâti $B_2$. La deuxième entrée motrice 42 commande donc le pivotement de la deuxième partie $B_2$ de l'articulation autour du deuxième axe $A_2$.

Le calcul théorique et la pratique montrent qu'une telle tête articulée à trois axes, avec seulement deux organes de commande (les moteurs $M_1$ et $M_2$) permettrait d'orienter l'outil 8 selon sensiblement toutes les orientations de la sphère, même avec retournement (c'est-à-dire au-delà de 180°) sans présenter aucun point singulier, comme c'était le cas jusqu'à présent. Les seuls points singuliers rencontrés sont ceux qui apparaissent dans le cas du retournement complet de l'outil, c'est-à-dire que le domaine de manoeuvrabilité s'étend théoriquement sur environ 340° de la sphère.

On a décrit à propos des figures 2 et 3 un mode de réalisation simple des deux chaînes cinématiques, permettant de bien faire comprendre l'invention. Cependant ces deux chaînes cinématiques ne sont pas entièrement indépendantes. C'est ainsi que si on veut seulement commander une rotation des axes $A_1$ et $A_3$ en laissant l'axe $A_2$ fixe, on doit prévoir une compensation sur l'entrée motrice 42 et, inversement, pour corriger les déplacements relatifs des trois bâtis. Ceci peut être obtenu en prévoyant un algorithme approprié sur les circuits de commande des moteurs $M_1$ et $M_2$. Comme on le verra plus loin à propos de la figure 4, on peut réaliser deux chaînes cinématiques n'ayant aucune interférence entre elles, grâce à l'adjonction d'un différentiel.

On a indiqué précédemment que, suivant l'invention, les bâtis $B_1$ et $B_3$ pivotent toujours dans le même sens. Il peut être commode de prévoir au surplus qu'ils pivotent d'angles égaux et il suffit pour cela de choisir convenablement les rapports d'engrenage des chaînes cinématiques.

C'est ainsi que, dans le cas de la figure 2, si l'axe intermédiaire $A_2$ est à égale distance des axes $A_1$ et $A_3$, on peut choisir les roues 16, 28 et 32, 34 dans le rapport 1/1, ou toute autre solution, sachant que les pignons 22 et 38 doivent tourner à la même vitesse si les secteurs 24 et 40 sont égaux.

On a représenté sur la figure 4 un autre mode de réalisation de chaînes cinématiques avec différentiel. Pour rendre le dessin plus lisible, on n'a pas fait figurer les éléments du bâti $B_1$, $B_2$, $B_3$ (qui peuvent être identiques à ce qui a été représenté sur la figure 2), ni les entrées motrices 14, 16, 42, 44.

Tous les éléments 18 à 30 de la première chaîne cinématique sont identiques à ceux de la figure 2. Le pignon conique 32', calé sur l'arbre 30, est analogue au pignon 32, mais, au lieu d'attaquer directement le pignon conique 34, il est incorporé à un différentiel 56 dont le carter 58, monté fou sur l'arbre 30, est solidaire d'un pignon conique 60 qui engrène avec le pignon conique 34.

Dans la deuxième chaîne cinématique, les éléments 46 à 54 sont identiques à ce qui a été décrit à propos de la figure 2, mais l'arbre 48 porte un pignon 62 qui engrène avec une succession de trois pignons 64, 66, 68, ce dernier étant calé sur un demi-arbre 30' situé dans le prolongement de l'arbre 30. Un pignonm conique 70, faisant partie du différentiel 56, est calé sur l'arbre 30' et engrène avec les satellites 72, 72' portés par le carter 58 du différentiel.

On va montrer que, grâce à ce différentiel, il n'existe plus d'interférence entre les deux chaînes cinématiques et que les mouvements relatifs des bâtis sont compensés. On va supposer les rapports de transmission suivants: couple 22-24 : 1/6; couple 26-28 : 3/1; couple 50-52 : 1/6; couple 62-64-66-68 : 1/3; couple 38-40 : 1/6; couple 60-34 : 1/1,5.

Si on veut faire effectuer un pivotement de 10° au bâti $B_1$ autour de l'axe $A_1$, sans rotation autour de l'axe $A_2$, le pignon 22 doit être entraîné sur 60° (rapport 1/6) par l'entrée motrice 14. Le pignon 26 tourne aussi de 60° et le pignon 28 de 180° (rapport 1/3) en entraînant l'arbre 30 qui fait tourner le pignon 32' du différentiel de 180°. Le pignon 70 du différentiel qui est relié cinématiquement à l'arbre 48 (lequel est immobile) ne tourne pas. Le carter porte-satellite 58, solidaire du pignon 60 tourne deux fois moins vite, soit 90°. La couronne 34, dans le rapport 1/1,5 tourne de 60°, comme le pignon 38 qui entraîne le secteur 40 dans le rapport 1/6 soit sur 10°, autour de l'axe $A_3$ comme pour le pivotement autour de l'axe $A_1$ et dans le même sens, Aucun pivotement ne se produit autour de l'axe $A_2$ puisque l'arbre 48 n'est pas entraîné.

De même, si on veut effectuer un pivotement de 10° autour de l'axe $A_2$, mais sans pivotement autour des axes $A_1$ et $A_3$, l'arbre 48 doit tourner de 60° (rapport 50-52 : 1/6). Le pignon 62 tourne également de 60° et entraîne le pignon 68 de 20°. Le pignon 70 du différentiel, calé sur l'arbre 30' tourne de 20° dans le même sens que la rotation autour de l'axe $A_2$. La résultante est nulle et le différentiel ne bouge pas par rapport à l'axe $A_2$, si bien que la rotation autour de l'axe $A_2$ n'a aucune influence sur les axes $A_1$ ou $A_3$.

On a représenté sur la figure 1, pour simplifier, des bâtis $B_1$ $B_2$ $B_3$ en forme d'étriers, mais on voit sur les figures 2 et 3 qu'au moins le bâti $B_1$ est en forme de boîtier. Dans la pratique, les trois bâtis $B_1$ $B_2$ $B_3$ sont réalisés sour la forme de carters fermés étanches, ce qui permet un fonctionnement satisfaisant même en milieu hostile.

D'autre part, suivant l'invention, les deux moteurs $M_1$, $M_2$ d'actionnement des trois axes sont déportés en dehors de la tête articulée et sont supportés par les bras 4 lui-même. Ceci limite le poids des organes en mouvement sur la tête articulée et supprime tous les aléas provenant des joints tournants, collecteurs, canalisations souples qui sont nécessaires dans les têtes articulées où les moteurs sont disposés, au voisinage des articulations, dans les parties mobiles elles-mêmes de la tête articulée. Enfin, un robot équipé d'une tête articulée suivant l'invention permet de faire décrire à l'outil sensiblement tous les volumes dans l'espace, sans point singulier, avec seulement cinq moteurs de commande, dont deux seulement pour la tête articulée.

On a indiqué à titre d'exemple dans ce qui précède que le deuxième axe $A_2$ pourrait être situé à mi-distance entre $A_1$ et $A_3$, mail il peut être avantageux, pour des raisons constructives, d'augmenter l'un des écartements par exemple l'écartement $A_2A_3$ qui peut être d'environ 1,6 à 2,1 fois l'écartement $A_1A_2$. De même, les rapports des trains d'engrenages des deux chaînes cinématiques peuvent deuxième choisis différents de ceux qui ont été indiqués ci-dessus à titre d'exemple.

Comme il est bien connu pour les transmissions classiques comportant des articulations, la vitesse de déplacement angulaire d'une partie commandée (par exemple l'un des bâtis $B_1$, $B_2$, $B_3$) varie, par rapport à la vitesse de l'entrée motrice, en fonction de l'angle de pivotement de l'articulation considérée.

Ceci impose souvent de limiter les angles de pivotement à des valeurs relativement faibles, à cause d'une perte de vitesse importante et, par conséquent, limite dans la pratique à une fraction seulement de la demi-shpère le domaine de manoeuvrabilité des têtes articulées utilisées jusqu'à présent.

Au contraire, avec une tête articulée conforme à l'invention, on a établi que la perte de vitesse, pour une orientation quelconque de l'outil, dans la demi-sphère centrée sur l'axe longitudinal XX, est inférieure à 50%. Cesi revient à dire qu'on peut obtenir n'importe quelle vitesse d'orientation de l'outil, dans la demi-sphère, avec une vitesse de l'arbre d'entrée motrice égale au plus à deux fois la vitesse nécessaire au voisinage de la position droite, suivant l'axe XX, de la tête articulée. Il est donc possible d'obtenir une réponse satisfaisante en orientation de l'outil, même pour un domaine s'étendant au-delà de la demi-sphère.

## Revendications

1. Tête articulée pour robot industriel qui comprend trois bâtis mobiles ($B_1$, $B_2$, $B_3$) montés à la suite les uns des autres suivant un axe longitudinal (XX), le premier bâti ($B_1$) étant porté par l'extrémité libre du bras (2) du robot et étant rotatif autour d'un premier axe ($A_1$) par rapport à ce bras, le deuxième bâti ($B_2$) étant porté par le premier bâti ($B_1$) et rotatif autour d'un deuxième axe ($A_2$) par rapport au premier bâti ($B_1$), et le troisième bâti ($B_3$) étant porté par le deuxième bâti ($B_2$) et rotatif autour d'un troisième axe ($A_3$) par rapport au deuxième bâti ($B_2$), ledit troisième bâti supportant un outil (10, 12) positionné et orienté par le robot, ladite tête articulée étant caractérisée en ce que:

— le premier axe ($A_1$) est perpendiculaire à l'axe longitudinal (XX);

— le premier axe ($A_1$) et le troisième axe ($A_3$) sont espacés l'un de l'autre et sont toujours situés dans un même plan, lesdits premier et troisième axes étant parallèles en position droite de la tête articulée;

— le deuxième axe ($A_2$) est situé entre le premier et le troisième axes et est toujours perpendiculaire au plan précité contenant le premier et le troisième axes;

— la rotation des trois bâtis ($B_1$, $B_2$, $B_3$) autour des trois axes d'articulation ($A_1$, $A_2$, $A_3$) est commandée par deux organes moteurs ($M_1$, $M_2$) portés par le bras (4).

2. Tête articulée suivant la revendication 1, caractérisée en ce que:

— la rotation du premier bâti ($B_1$) autour du premier axe ($A_1$) est commandée par un premier organe moteur ($M_1$) porté par le bras (4);

— la rotation du troisième bâti ($B_3$) autour du troisième axe ($A_3$) est commandée, à partir du premier bâti ($B_1$), et, partant, à partir du premier organe moteur ($M_1$), par l'intermédiaire d'une première chaîne cinématique (14 à 40) qui est imposée entre le premier et le troisième bâti et qui impose au troisième bâti ($B_3$) des déplacements angulaires dans le même sens que les déplacements angulaires du premier bâti ($B_1$);

— la rotation du deuxième bâti ($B_2$) autour du deuxième axe ($A_2$) est commandée, à partir d'un deuxième organe moteur ($M_2$) porté par le bras, par l'intermédiaire d'une deuxième chaîne cinématique (42 à 52) interposée entre le premier et le deuxième bâti.

3. Tête articulée suivant la revendication 2, caractérisée en ce que: la première chaîne cinématique comprend un premier arbre d'entrée motrice (14) et trois arbres intermédiaires (20, 30, 36), les deux arbres (14 et 30) s'étendant respectivement suivant les axes ($A_1$ et $A_2$), l'arbre (36) s'étendant suivant l'axe longitudinal (XX) et l'arbre (20) étant parallèle à l'axe ($A_2$) et concourant avec l'axe ($A_1$); les arbres (14 et 20) tourillonnent dans le premier bâti ($B_1$), l'arbre (36) tourillonne dans le deuxième bâti ($B_2$), et l'arbre (30) tourillonne à la fois dans le premier et le deuxième bâti ($B_1$, $B_2$); les quatre arbres sont reliés entre eux par des couples d'engrenages droits et coniques (16, 18, 26, 28, 32, 34).

4. Tête articulée suivant la revendication 3, caractérisée en ce que la première chaîne cinématique comprend un pignon conique (22) calé sur l'arbre (20) et engrénant avec un secteur denté (24) solidaire du bras (4) et comprend également un pignon conique (38) calé sur l'arbre (36) et engrénant avec un secteur denté (40) solidaire du bâti ($B_3$).

5. Tête articulée suivant l'une des revendications 3 ou 4, caractérisée en ce que l'organe moteur ($M_1$) porté par le bras (4) entraîne l'arbre d'entrée motrice (14) de la première chaîne cinématique.

6. Tête articulée suivant l'une des revendications 2 à 5, caractérisée en ce que: la deuxième chaîne cinématique comprend un premier arbre d'entrée motrice (42) et deux arbres intermédiaires (48, 54), les deux arbres (42 et 54) s'étendant respectivement suivant les axes (A₁ et A₂) et l'arbre (48) étant parallèle à l'axe (A₂) et concourant avec l'axe (A₁); les trois arbres (42, 48, 54) tourillonnant dans le premier bâti (B₁); les trois arbres sont reliés entre eux par des couples d'engrenages coniques et droits (44, 46, 50, 52) dont le dernier (52) est solidaire du bâti (B₂); l'organe moteur (M₂) porté par le bras (4) entraîne l'arbre d'entrée motrice (42) de la deuxième chaîne cinématique.

7. Tête articulée suivant les revendications 3, 4, 5, et 6, caractérisée en ce qu'un différentiel (56) est interposé entre la première et la deuxième chaîne cinématique.

8. Tête articulée suivant la revendication 7, caractérisée en ce que l'un des engrenages d'entrée (32') du différentiel (56) est calé sur l'arbre (30) de la première chaîne cinématique; en ce que l'autre engrenage d'entrée (70) du différentiel (56) est lié en rotation à l'arbre (48) de la deuxième chaîne cinématique par un train dengrenages (62, 64, 66, 68); et en ce que le carter (58) du différentiel est solidaire d'un pignon conique (60) engrenant avec le pignon conique (34) de la première chaîne cinématique.

9. Tête articulée suivant l'une des revendications 1 à 8, caractérisée en ce que l'axe intermédiaire (A₂) est situé sensiblement à mi-distance entre les axes (A₁ et A₃).

10. Tête articulée suivant l'une des revendications 1 à 8, caractérisée en ce que le rapport des écartements entre d'une part les axes (A₁ et A₂) et, d'autre part, les axes (A₂ et A₃), est compris entre 1/1 et 1/2,1.

11. Tête articulée suivant l'une des revendications 2 à 10, caractérisée en ce que le rapport de transmission de la première chaîne cinématique est tel que l'angle de pivotement du bâti (B₃) par rapport au bâti (B₂) autour de l'axe (A₃) est de même sens et égal à l'angle de pivotement du bâti (B₁) par rapport au bras (4) autour de l'axe (A₁).

12. Robot industriel, caractérisé en ce qu'il comprend une tête articulée suivant l'une des revendications précédentes montée à l'extrémité du bras (4) du robot.

**Patentansprüche**

1. Gelenkkopf für Roboter mit drei beweglichen rahmenartigen Bauteilen (B₁, B₂, B₃), die entlang einer Längsachse (XX) hintereinander montiert sind, wobei das erste, von dem freien Ende des Roboterarmes (2) getragene Bauteil (B₁) gegenüber dem Arm um eine erste Achse (A₁), das zweite, von dem ersten Bauteil (B₁) getragene Bauteil (B₂) gegenüber dem ersten Bauteil (B₁) um eine zweite Achse (A₂) und das dritte, von dem zweiten Bauteil (B₂) um eine dritte Achse (A₃) drehbar gehalten ist und wobei das dritte Bauteil eine durch den Roboter positionierte und ausgerichtete Werkzeugeinheit (10, 12) trägt, dadurch gekennzeichnet, dass
— die erste Achse (A₁) rechtwinklig zur Längsachse (XX) angeordnet ist,

— die erste und dritte, voneinander getrennt in einer Ebene liegenden Achsen (A₁ und A₃) stets parallel zueinander in der Nähe des Gelenkkopfes verlaufen,

— die zweite zwischen der ersten und dritten Achse liegende Achse (A₂) stets rechtwinklig zu der Ebene liegt, in der die erste und dritte Achse verlaufen und

— die Drehbewegungen der drei Bauteile (B₁, B₂, B₃) um die drei Gelenkachsen (A₁, A₂, A₃) durch zwei von dem Arm (4) getragene Antriebsorgane (M₁, M₂) gesteuert sind.

2. Gelenkopf nach Anspruch 1, dadurch gekennzeichnet, dass
— die Drehbewegung des ersten Bauteiles (B₁) um die erste Achse (A₁) von einem ersten, vom Arm (4) getragenen Antriebsorgan (M₁) gesteuert ist,

— bei einer durch das Antriebsorgan (M₁) gesteuerten Bewegung des ersten Bauteiles (B₁) die Drehbewegung des dritten Bauteiles (B₃) um die dritte Achse (A₃) über eine kinematische Kette (14 bis 40) erfolgt, die zwischen dem ersten und dem dritten Bauteil (B₃) angeordnet ist und die dem dritten Bauteil (B₃) die Winkelverstellungen in demselben Sinn auferlegt, wie sie das Bauteil (B₁) erfährt, und dass

— ausgehend von einem zweiten von dem Arm getragenen Antriebsorgan (M₂), die Drehbewegung des zweiten Bauteiles (B₂) um die zweite Achse (A₂) über eine zweite kinematische Kette (42 bis 52) zwischen dem ersten und dem zweiten Bauteil erfolgt.

3. Gelenkopf nach Anspruch 1, dadurch gekennzeichnet, dass die erste kinematische Kette aus einer ersten Antriebseingangswelle (14) und drei Hilfswellen (20, 30, 36) besteht, von denen die beiden Wellen (14 und 30) entsprechend den Achsen (A₁ bzw. A₂), die Welle (36) entsprechend der Längsachse (XX) und die Welle (20) parallel zur Achse (A₂) sowie entsprechend der Achse (A₁) verlaufen, dass die Wellen (14 und 20) in dem ersten Bauteil (B₁), die Welle (36) in dem zweiten Bauteil (B₂) und die Welle (30) im ersten und zweiten Bauteil (B₁, B₂) drehbar gehalten sind und dass die vier Wellen durch Stirn- und Kegelradgetriebe (16, 18, 26, 28, 32, 34) miteinander verbunden sind.

4. Gelenkopf nach Anspruch 3, dadurch gekennzeichnet, dass die erste kinematische Kette aus einem fest mit der Welle (20) verbundenen Kegelrad (22) besteht, das mit einem Zahnsegment (24) in Eingriff ist, welches in fester Verbindung mit dem Arm (4) ist, und aus einem fest mit der Welle (36) verbundenen Kegelrad (38) besteht, das im Eingriff mit dem Zahnsegment (40) ist, welches in fester Verbindung mit dem Bauteil (B₃) ist.

5. Gelenkopf nach einem der Ansprüche 3 oder 4, dadurch gekennzeichnet, dass das vom Arm (4) getragene Antriebsorgan (M₁) die Antriebswelle (14) der ersten kinematischen Kette antreibt.

6. Gelenkopf nach einem der Ansprüche 2 bis 5, dadurch gekennzeichnet, dass die zweite kinematische Kette aus einer ersten Antriebswelle (42) und zwei Hilfswellen (48, 54) besteht, von denen die beiden Wellen (42 und 54) entsprechend den Achsen (A₁ und A₂) und die Welle (48) parallel zur Achse (A₂) und entsprechend der Achse (A₁) verläuft, dass die drei Wellen (42, 48, 54) in dem ersten Bauteil (B₁) drehbar gelagert sind, dass die drei Wellen durch Stirn- und Kegelradgetriebe (44, 46, 50, 52) miteinander verbunden sind, von denen die letztere (52) am Bauteil (B₂) fest ist und dass das vom Arm (4) getragene Antriebsorgan (M₂) die Antriebswelle (42) der zweiten kinematischen Kette antreibt.

7. Gelenkopf nach den Ansprüchen 3, 4, 5 und 6, dadurch gekennzeichnet, dass ein Differential (56) zwischen der ersten und zweiten kinematischen Kette angeordnet ist.

8. Gelenkopf nach Anspruch 7, dadurch gekennzeichnet, dass das eine Eingangskegelrad (32') des Differentials (56) auf der Welle (30) der ersten kinematischen Kette fest ist, dass das andere Eingangskegelrad (70) des Differentials (56) mit der Welle (48) der zweiten kinematischen Kette über Rädergetriebe (62, 64, 66, 68) drehbar verbunden ist und dass das Differentialgehäuse (58) mit einem Kegelrad (60) fest verbunden ist, das mit einem Kegelrad (34) der ersten kinematischen Kette in Eingriff ist.

9. Gelenkopf nach einem der Ansprüche 1 bis 8, dadurch gekennzeichnet, dass die zwischen den beiden Achsen (A₁ und A₃) liegende Achse (A₂) auf der halben Entfernung zwischen den beiden Achsen (A₁ und A₃) liegt.

10. Gelenkopf nach einem der Ansprüche 1 bis 8, dadurch gekennzeichnet, dass das Verhältnis der Entfernung zwischen den Achsen (A₁ und A₂) einerseits und den Achsen (A₂ und A₃) andererseits zwischen 1/1 und 1/2,1 liegt.

11. Gelenkopf nach einem der Ansprüche 2 bis 10, dadurch gekennzeichnet, dass das Übersetzungsverhältnis der ersten kinematischen Kette dem Schwenkwinkel des Bauteilel (B₃) gegenüber dem Bauteil (B₂) um die Achse (A₃) entspricht, was dem Schwenkwinkel des Bauteiles (B₁) gegenüber dem Arm (4) um die Achse (A₁) in der gleichen Richtung entspricht.

12. Roboter, dadurch gekennzeichnet, dass er mit einem Gelenkopf nach einem der vorstehenden Ansprüche ausgestattet ist, der auf dem äussersten Ende des Armes (4) angebracht ist.

## Claims

1. An articulated effecter for an industrial robot which comprises three movable frames (B₁, B₂, B₃) mounted in sequence one after the other along a longitudinal axis (XX), the first frame (B₁) being borne by the free end of the arm (2) of the robot and being rotatable around a first axis (A₁) in relation to such arm, the second frame (B₂) being born by the first frame (B₁) and being rotatable around a second axis (A₂) in relation to the first frame (B₁), and the third frame (B₃) being born by the second frame (B₂) and being rotatable around a third axis (A₃) in relation to the second frame (B₂), the third frame supporting a tool (10, 12) positioned and oriented by the robot, the articulated effecter being characterized in that:

— the first axis (A₁) is perpendicular to the longitudinal axis (XX);

— the second axis (A₁) and the third axis (A₃) are spaced out from one another and always located in the same plane, the first and third axes being parallel in the straight position of the articulated effecter;

— the third axis (A₂) is located between the first and third axes and is always perpendicular to the aforementioned plane containing the first and third axes;

— the rotation of the three frames (B₁, B₂, B₃) around the three axes of articulation (A₁, A₂, A₃) is controlled by two driving elements (M₁, M₂) borne by the arm (4).

2. An articulated effecter according to Claim 1, characterized in that:

— the rotatation of the first frame (B₁) around the first axis (A₁) is controlled by a first driving element (M₁) borne by the arm (4);

— the rotation of the third frame (B₃) around the third axis (A₃) is controlled, from the first frame (B₁), and, therefore, from the first driving element (M₁), via a first kinematic chain (14 to 40) which is interposed between the first and third frames and which confers on the third frame (B₃) angular displacements in the same direction as the angular displacements of the first frame (B₁);

— the rotation of the second frame (B₂) around the second axis (A₂) is controlled, from a second driving element (M₂) borne by the arm, via a second kinematic chain (42 to 52) interposed between the first and second frames.

3. An articulated effecter according to Claim 2, characterized in that: the first kinematic chain comprises a first driving input shaft (14) and three intermediate shafts (20, 30, 36), the two shafts (14 and 30) extending along the axes (A₁ and (A₂) respectively, the shaft (36) extending along the longitudinal axis (XX) and the shaft (20) being parallel with the axis (A₂) and concurrent with the axis (A₁); the shafts (14 and 20) are journalled in the first frame (B₁), the shaft (36) is journalled in the second frame (B₂), and the shaft (30) is journalled in both the first and second frames (B₁, B₂), the four shafts being interconnected via spur and bevel gear pairs (16, 18, 26, 28, 32, 34).

4. An articulated effecter according to Claim 3, characterized in that the first kinematic chain comprises a conical pinion (22) keyed to the shaft (20) and meshing with a toothed sector (24) connected to the arm (4) and also comprises a conical pinion (38) keyed to the shaft (36) and meshing with a toothed sector (40) connected to the frame (B₃).

5. An articulated effecter according to one of Claims 3 or 4, characterized in that the driving element (M₁) borne by the arm (4) actuates the driving input shaft (14) of the first kinematic chain.

6. An articulated effecter according to one of Claims 2 to 5, characterized in that the second kinematic chain comprises a first driving input shaft (42) and two intermediate shafts (48, 54), the two shafts (42 and 54) extending along the axes (A₁ and A₂) respectively and the shaft (48) being parallel with the axis (A₂) and concurrent with the axis (A₁); the three shafts (42, 48, 54) are journalled in the first frame (B₁); the three shafts are interconnected via spur and bevel gear pairs (44, 46, 50, 52), the last (52) of which is connected to the frame (B₂); and the

driving element (M₂) borne by the arm (4) actuates the driving input shaft (42) of the second kinematic chain.

7. An articulated effecter according to Claim 3, characterized in that a differential (56) is interposed between the first and second kinematic chains.

8. An articulated effecter according to Claim 7, characterized in that one (32') of the input gears of the differential (56) is keyed to the shaft (30) of the first kinematic chain; the input gear (70) of the differential (56) is rotatably connected to the shaft (48) of the second kinematic chain via a train of gears (62, 64, 66, 68); and the casing (58) of the differential is connected to a conical pinion (60) meshing with the conical pinion (34) of the first kinematic chain.

9. An articulated effecter according to one of Claims 1 to 8, characterized in that the intermediate axis ($A_2$) is located substantially halfway between the axes ($A_1$ and $A_3$).

10. An articulated effecter according to one of Claims 1 to 8, characterized in that the spacing ratio between the axes ($A_1$ and $A_2$) on the one hand and the axes ($A_2$ and $A_3$) on the other lies between 1/1 and 1/2.1.

11. An articulated effecter according to one of Claims 2 to 10, characterized in that the transmission ratio of the first kinematic chain is such that the angle of pivoting of the frame ($B_3$) in relation to the frame ($B_2$) around the axis ($A_3$) is in the same direction as and equal to the angle of pivoting of the frame ($B_1$) in relation to the arm (4) around the axis ($A_1$).

12. An industrial robot characterized in that it comprises an articulated effecter according to one of the preceding Claims, mounted at the end of the arm (4) of the robot.

FIG_1

FIG_2

FIG. 3

FIG_4